# EUROPEAN PATENT SPECIFICATION

(11) **EP 1 509 299 B1**
(45) Date of publication and mention of the grant of the patent: **14.05.2008**
(21) Application number: 03718564.2
(22) Date of filing: 16.05.2003
(51) Int. Cl.: B01D 1/00, B01D 53/04, B01D 53/74, B01D 53/88, F24F 3/16

(54) **METHOD AND DEVICE FOR CLEANING AIR**
VERFAHREN UND VORRICHTUNG ZUR REINIGUNG VON LUFT
PROCEDE ET DISPOSITIF DE NETTOYAGE D'AIR

(30) Priority: 16.05.2002 AU PS233502
(43) Date of publication of application: 02.03.2005
(73) Proprietor: Spry Associates PTY Ltd., Wanniassa, ACT 2903 (AU)
(72) Inventor: SPRY, Paul Edwin, Wanniassa, ACT 2903 (AU)
(74) Representative: Serjeants
(86) International application number: PCT/AU2003/000590
(87) International publication number: WO 2003/097222

(56) References cited:
- WO-A-94/29001
- WO-A-02/073094
- GB-A- 2 003 049
- US-A- 3 942 960
- US-A- 5 635 133
- DATABASE WPI Week 199410 Derwent Publications Ltd., London, GB; AN 1994-079414 XP002376248 & JP 06 031133 A (MATSUSHITA ELEC IND CO LTD) 8 February 1994 (1994-02-08)
- DATABASE WPI Week 199948, Derwent Publications Ltd., London, GB; Class J01, AN 1999-564992, XP002999235 & JP 11 244 641 A (TAIKISHA LTD) 14 September 1999

## Description

### Field of the Invention

The present invention relates to the operation of systems and devices that ventilate and otherwise reduce the amount of contamination in the air in spaces. These spaces may be occupied, or visited, by humans or other things. An example of such a space is a building occupied by humans. An example of such a system is an air-conditioning system. An example of such a device is an air-conditioning unit.

### Background

It is usual to limit the amount of contaminant in the air in these spaces by introducing air from the outside into the spaces so as to lower the concentration of contaminant in the air in spaces and/or by cleaning air that is recirculated to and from the spaces by air handling units.

When outside air is introduced into a space it usually causes some contaminated air from the space to go outside. It is usual to arrange the space and its ventilating equipment so that contaminated air outflow, to the extent reasonably practicable, does not contaminate the outside air that is introduced to the space.

The contaminants in the space are usually those generated in the space. Examples are dusts etc. and gases and odours emitted by organisms, objects and surfaces in the space, contaminants emitted as a result of the smoking of tobacco and other substances in the space and contaminants released as a result of activities taking place in the space.

In some instances contaminants are in the outside air that is introduced into the space.

These contaminants in air may be particulate matter (e.g. dust) or gaseous substances (e.g. fully evaporated odourous chemicals).

Generally, particulate matter is removed, fully or in part, by air cleaning and/or ventilation. Generally, gaseous contamination in spaces is reduced or removed by ventilation.

Presently cleaning (removing) of particulate matter from air is a well-developed art and is commonly employed to clean air for delivery into spaces. Including those normally occupied by humans.

Presently cleaning of gaseous matter from air is not a well-developed art (not as well developed as cleaning (removing) of particulate matter from air) and is not commonly employed to clean air for delivery into spaces.

Ventilation often introduces outside air into a space that may be in some combination be cooled and/or heated and/or humidified and/or dehumidified and/or otherwise conditioned. The ventilation air is introduced by itself or mixed with other air. Reduction of ventilation flow is desirable as it reduces the amount of energy used to maintain a particular value or range of temperature and/or humidity and/or other conditions in the space.

The rate of ventilation of spaces not occupied by humans will usually be chosen so as to restrict the amount of contaminant(s) to a particular level or levels. The level(s) may be set with regard to the propensity of the atmosphere in the space to be flammable, corrosive, odourous or otherwise inimical to the space, to its content or to the operation or enjoyment of any organism, process or procedure that occurs in the space or in a related space.

The rate of ventilation of spaces occupied by humans is usually determined by two criteria. The first criterion, health and safety, results in the determination of a certain ventilation rate.

The health and safety criteria based ventilation rate criterion may be further divided into two sub-criteria.

The first sub-criterion is related to the essentials of respiration and is the maintenance of minimum oxygen and maximum carbon dioxide levels in the space. The second sub-criterion is the maintenance of other health and safety related substances to limiting values in the concentration in air.

Usually the health and safety criteria based ventilation rate will be the higher of the rates determined by the two sub-criteria.

The second criteria is amenity of the occupant(s) of the space. Factors such as odour, irritation and the like are used in the determination of a usually different and usually higher ventilation rate.

The ventilation rate used in practice is usually the higher of the rates determined by either of the two criteria.

Ventilation rates in buildings in Australia, as an example, are usually set in accordance with Australian Standard AS 1668.2

In the application of the 1991 edition of AS1668.2 (which is referenced in the edition of the Building Code of Australia that is generally applicable at the beginning of the year 2001) the required ventilation rate may be reduced if particulate matter is removed from the air in the space and it may be further reduced if certain odorous and irritating contaminants are removed from the space.

Generally the odourous and irritating contamination is gaseous.

The usual means of ventilating and heating or cooling or otherwise conditioning a space involves heating or cooling or otherwise conditioning a supply air flow, sending this supply air flow into the space, returning the air flow, or a proportion thereof, to an air handling and/or heating and/or cooling and/or humidification and/or dehumidification and/or otherwise conditioning apparatus for it to be again treated for a return supply to the space and so on. Outside air is usually added to the supply air or return air at some point after the air flow leaves the space and before the air flow enters the space. To achieve a balance of flows, a flow of air equal to the ventilation flow leaves the space by action of apparatus or through openings in the surfaces bounding the space.

In some instances the ventilation air is separately delivered to the space.

The ventilation air flow is usually smaller than the supply or return air flows here described.

Removal of gaseous contaminants is usually achieved by adsorbent, chemisorbent or catalytic beds. It is a property of adsorbent, chemisorbent or catalytic beds suited to removal of a pollutant from an air flow under specific circumstances that there is a particular thickness of bed, dimension of the bed in the direction of airflow through the bed, herein termed the Critical Thickness, with certain characteristics.

If the thickness of the bed is greater than the Critical Thickness then the pro-rata rate of removal of a particular contaminant, typically expressed as efficiency or ratio of inlet concentration minus outlet concentration all divided by inlet concentration, remains essentially constant until a certain period of time of operation of the apparatus has passed or a certain amount of contaminated air has passed into the bed. After this period of essentially constant efficiency has expired the efficiency of the bed will reduce as further operation of the apparatus occurs.

It is a particular property of catalytic beds that degradation of performance over time is usually due to a process in which the utility of the catalyst is degraded by a process usually termed poisoning and this degradation may proceed at a fast or slow rate dependent on the concentration of "poison" in the air flow. The "poison" is not necessarily, and is usually not, the contaminant that is intentionally removed, or substantially altered, by the catalytic bed. In some circumstances, the degradation is very slow and the life of the catalytic bed is very long. In some circumstances where the rate of poisoning of a catalytic bed is adequately slow a catalytic bed may behave as a thick bed of low predictable efficiency.

Typically in the operation of beds that are thicker than the Critical Thickness during the substantially constant efficiency part of their operating cycle the efficiency of these beds will be approximately 100% or a value close to this which differs, or appears to differ, from approximately 100% as a result of test procedure inaccuracies or of detail apparatus design or construction imperfections.

A thin bed, thickness equal to or less than Critical Thickness, operates such that the efficiency of the bed, which initially is 100% or less than 100%, will reduce as operation of the apparatus occurs. This is a particular disadvantage of thin bed adsorptive chemisorptive, catalytic or combination thereof gas phase air cleaning devices.

Additionally, with a thin bed if the constitution of the contamination in the incoming air flow varies within an anticipated range the operation of the device produces a concentration of contamination in the treated air that varies and which may be effectively unpredictable. This is a particular disadvantage of thin bed adsorptive, chemisorptive, catalytic or combination thereof gas phase air cleaning devices

The particular advantage of thin bed adsorptive, chemisorptive, catalytic or combination thereof gas phase cleaning devices is that the pressure drop experienced by the air flow as it passes through the device bed is sufficiently low as to cause only an acceptable use of fan energy to propel the air flow through the bed.

Present devices for the removal of gaseous matter from air flows at heating/cooling/ventilation/dehumidification/humidification/other conditioning apparatus, such as ducted air-conditioning apparatus, pass the return, and/or supply and or ventilation air flow(s) through the device. These devices may be air washers, absorption process, or thin bed, a bed with a depth less than the Critical Thickness, adsorptive, chemisorptive, catalytic or combination thereof gas phase cleaning devices.

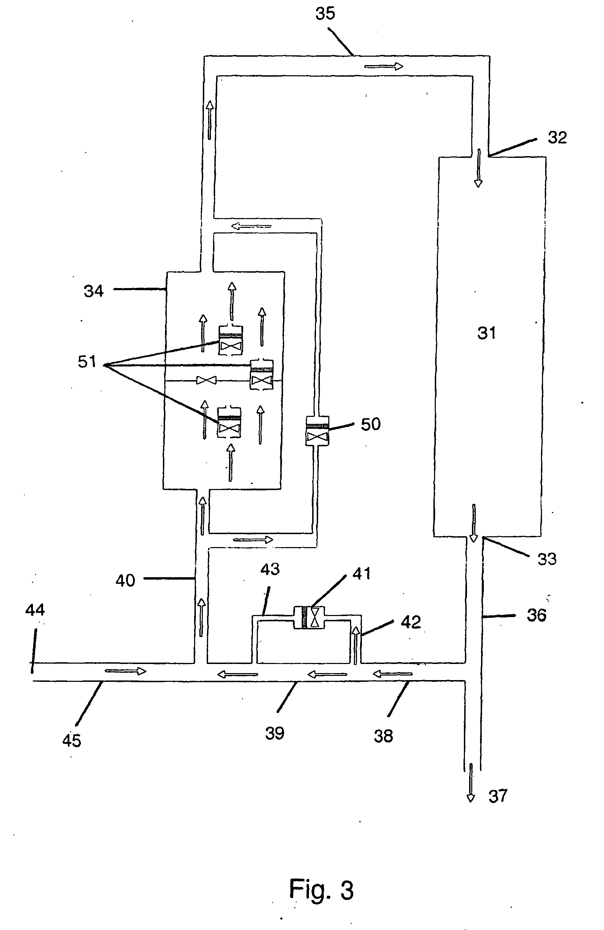

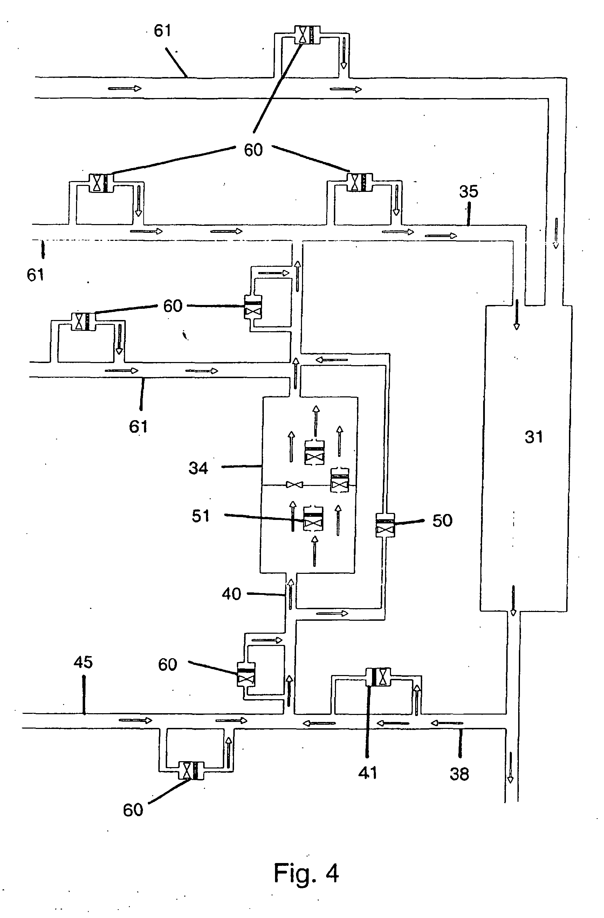

United States Patent 5635133 discloses a method and apparatus for killing micro organisms in a particle laden fluid medium. The apparatus includes a means to divide an intake air flow into a first air flow 12 and a second air flow 11. The first air flow 12 is small when compared to the sum of the first air flow and the second air flow. The first air flow 12 is passed through a filter 25 to remove particulate matter and then supplied to the general vicinity of an ultraviolet lamp and parabolic reflector, which emit ultraviolet germicidal beams for the treatment of the second air flow 11. The division of the intake air flow is carried out to reduce the build up of particulate matter on the lamp envelopes and reflector. The first and second air flows are recombined in the embodiment shown in Figures 3 and 4 to form an outlet air flow along a conduit 22. The apparatus is directed to the removal of particulate rather than gaseous contaminants and does not include a gas phase cleaning device. However, the use of such a device (e.g. a catalyst layer) is disclosed in JP 11-244641 and JP 6-031133.

None of the documents listed above discloses the use of a gas phase cleaning device that includes a cleaning bed having a thickness of greater than the Critical Thickness for the contaminant of concern.

### Summary of the Invention

It is an object of the present invention to provide a means and a method for removing gaseous contaminants from the air flowing through an apparatus that uses thick bed cleaning to remove contaminants and retains the advantages of thin bed cleaning whilst overcoming, or at least ameliorating, the disadvantages of thick bed cleaning.

Accordingly in one aspect, the present invention is an apparatus for removing gaseous contaminants from an intake air flow including:
a means to divide the intake air flow into a first air flow and at least one other air flow such that the first air flow is small when compared to the sum of the first air flow and each other air flow;
a gas phase cleaning device for cleaning the first air flow and
a means to combine the cleaned first air flow and all other air flows to form an outlet air flow
CHARACTERISED IN THAT the gas phase cleaning device includes a cleaning bed having a thickness of greater than the Critical Thickness for the contaminant of concern and through which the entire first air flow is passed.

In another aspect, the present invention is a method for removing gaseous contaminants from an intake air flow including the following steps:
dividing the intake air flow into a first air flow and at least one other air flow;
cleaning the first air flow by passing the entire first air flow through a gas phase cleaning device that includes a cleaning bed having a thickness of greater than the Critical Thickness for the contaminant of concern; and
combining the cleaned first air flow and all other air flows to form an outlet air flow;
where the first air flow is small when compared to the sum of the first air flow and each other air flow.

Whilst the pressure drop through the bed is substantial there is an acceptable use of fan energy to propel the air flow as only a proportion of the air flow is passed through the bed. Energy use is essentially proportional to the product of airflow rate and pressure drop.

More preferably the gas phase cleaning device will include a thick adsorbent, chemisorptive, catalytic (including photo catalytic) or combination thereof bed with one or more particulate arresting filters before and after the bed. The particulate arresting filter upstream of the bed is used to remove all or some of the matter that may adversely affect operation of the bed. The particulate arresting filter downstream of the bed is used to remove all or some of the matter released from the bed.

Preferably the gas phase cleaning device includes a fan with sufficient motive power to propel the chosen amount or proportion of contaminated air through the bed and any particulate arresting filters. The fan will typically have sufficient additional motive power to move the chosen portion of contaminated air against sufficient airflow resistance so that the device will operate satisfactorily in the circumstances of its application.

Preferably the constant proportion of contaminant removed will be at least 98%.

Preferably the air flow is divided into a first and second air flow.

In another aspect the present invention provides an air cleaning system for removing contaminant from at least one space including at least one air cleaning apparatus as described above.

Some of the embodiments of the invention will now be described by way of example only with reference to the accompanying drawings, in which:
- Figure 1 is a schematic illustration of the air cleaning apparatus according to one embodiment of the invention.
- Figure 2 is a schematic illustration of a system incorporating an air cleaning apparatus according to one embodiment of the invention.
- Figure 3 is a schematic illustration of a system incorporating an air cleaning apparatus according to one embodiment of the invention.
- Figure 4 is a schematic illustration of a system incorporating an air cleaning apparatus according to one embodiment of the invention.
- Figure 5 is a schematic illustration of a system incorporating an air cleaning apparatus according to one embodiment of the invention.

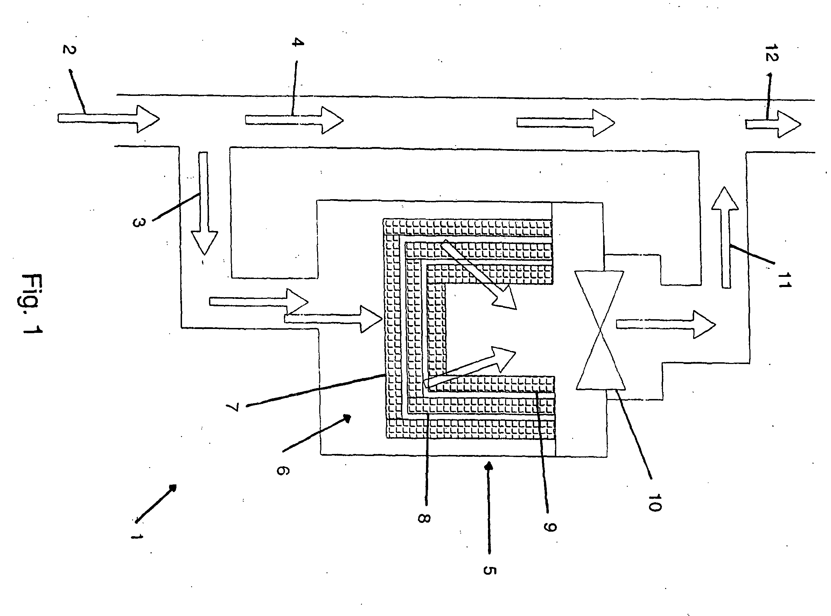

Referring to Figure 1, there is shown an apparatus 1 for removing gaseous contaminants from an air flow. The intake air flow 2 is divided into two air flows 3, 4, the first of which is small when compared to the intake air flow 2. The first air flow 3 is cleaned using in a cleaning unit 5 which includes a contaminant removal section 6. The contaminant removal section includes a bed 8 which has a thickness at least as thick as the Critical Thickness for a particular application. In the embodiment shown the bed has a filter 7 before the bed to remove particulate matter from the air flow and a filter 9 after the bed to remove particulate matter released from the bed. The air flow may pass through the contaminant removal section with the assistance of a fan 10 the air flow 11 exiting the contaminant removal section 6 is then fed back into the second air flow 4 to form a cleaner air flow 12 than the intake air flow.

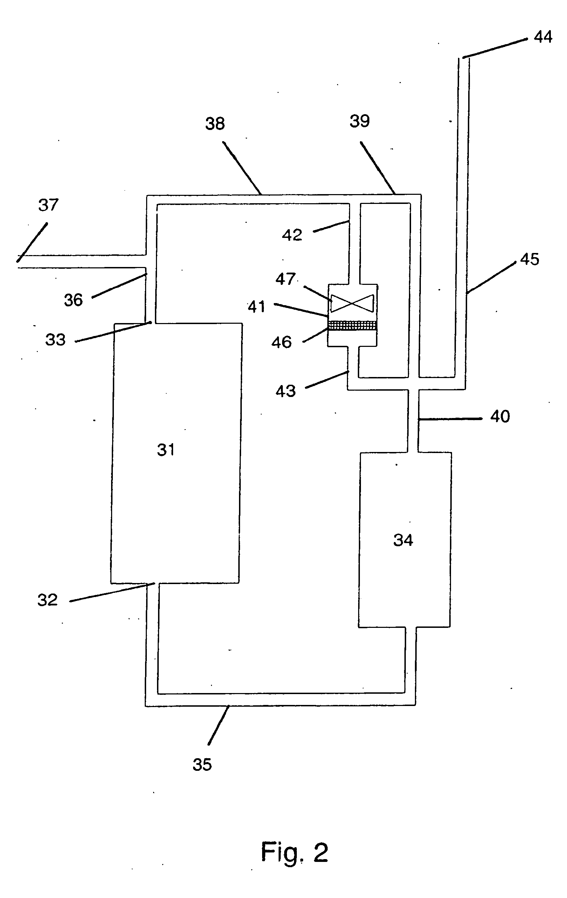

In respect of Figures 2 to 5 show systems in which an air cleaning apparatus is used. It will be observed that, depending on the location and characteristics of fans located in the air-handling unit or in the associated ductwork and the location of the thick bed gas phase air cleaning device, the fan within the gas phase air cleaning device may be required to operate against a negligible external air flow resistance or it may be required to operate against an external airflow resistance.

Referring to figures 2 to 5, a space 31 constituting a volume to be ventilated has an air inlet 32 and an air outlet 33. A heating/cooling/air-conditioning apparatus 34 sends air to the space via duct 35. Air leaves the space via duct 36 and some of this air is discharged to atmosphere at air discharge 37 and some of this air is sent along duct 38 until this air flow is divided into two air flows. The second air flow is sent to the air-conditioner via ducts 39 and 40 and the first air flow of the air in duct 38 is sent via duct 42 to the thick bed gas phase air cleaner 41 in which it is cleaned and then it is sent to the air-conditioner via ducts 43 and 40. Outside air enters at outdoor air inlet 44 and then is conveyed to the air-conditioner via ducts 45 and 40. Air which enters the thick bed gas phase air cleaner 41 is caused to pass through the thick bed 46 by fan 47; alternatively other fans and duct resistances in the system of ductwork etc may cause the desired air movement without use of fan 47 or with assistance from fan 47.

By means of this arrangement air-conditioner 34 is supplied with cleaned air from the thick bed gas phase air cleaner 41, outdoor air from outdoor air inlet 44 and air from space 31. The ventilation needs of the space are met by the combination of air flows from the thick bed gas phase air cleaner 41, and outdoor air inlet 44 with consequent reduction in the flow of air otherwise required from outdoor air inlet 44.

Referring to figure 3 shows a similar system to figure 2 with an additional thick bed gas phase air cleaner 50 which bypasses the air-conditioning unit and at least one thick bed gas phase air cleaner included with the air-conditioning unit 51.

Referring to figure 4 a similar system to figure 3 is shown with additional thick bed gas phase air cleaners 60 situated at various points around the system and additional ventilation ducts 61.

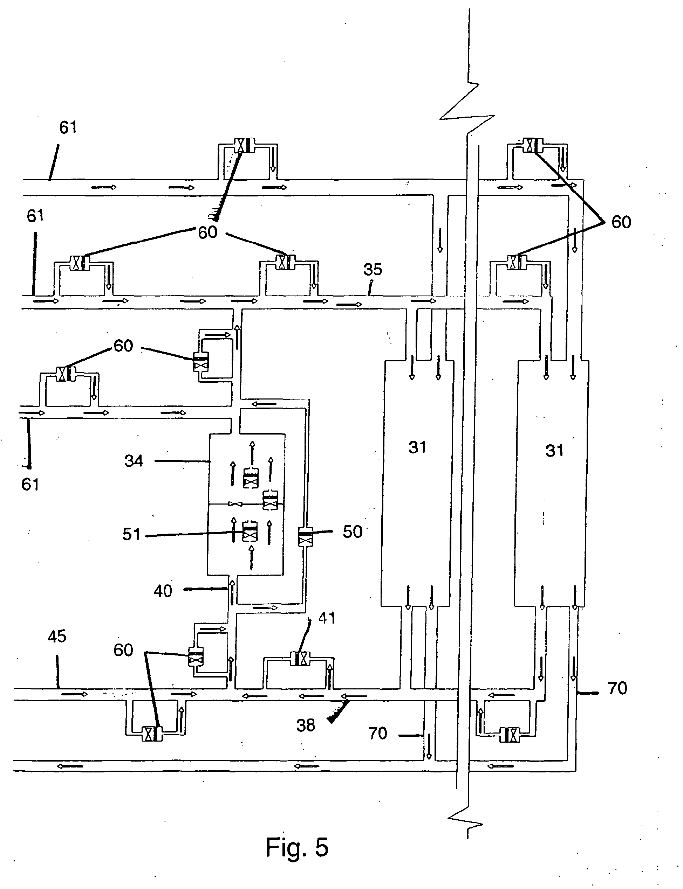

Referring to figure 5 a similar system to figure 4 is shown that is used to remove contaminants from multiple spaces 31 and additional exit ducts 70.

One example of a system including an apparatus according to one embodiment of the invention is:
- a gas phase air cleaning apparatus of adsorptive, chemisorptive or catalytic (or combination thereof) nature is used to clean part of the air flow taken from or sent to a space.
- the nature of the adsorptive, chemisorptive or catalytic (or combination thereof) air cleaning device is such that the rate of removal of a particular contaminant or contaminants expressed as efficiency (defined as the ratio of inlet concentration minus outlet concentration all divided by inlet concentration) remains essentially constant until a certain period of time of operation of the apparatus has passed or a certain amount of contaminated air has passed into the bed.
- the gas phase air cleaning device is used such that the rate of removal of a particular contaminant or contaminants expressed as efficiency (defined as the ratio of inlet concentration minus outlet concentration all divided by inlet concentration) remains essentially constant.
- the predictable efficiency of cleaning of the part of the air flow passing through the gas phase air cleaning device combined with the predictable proportion of the air flow that is passing through the gas phase air cleaning device is equivalent in effect to a predictable equivalent efficiency of gas phase air cleaning of the entire air flow.
- the predictable equivalent efficiency of gas phase air cleaning of the entire air flow permits a reduction of ventilation of the space with consequent energy and capital savings
- the predictable equivalent efficiency of gas phase air cleaning of the entire air flow permits an increase in the predictable quality of the air in the space without the use of energy that would have been used to achieve a similar result by means of increased ventilation.

In another form of the arrangement
- a gas phase air cleaning device of adsorptive, chemisorptive or catalytic (or combination thereof) nature is used to clean part of the air flow taken from outside and used to ventilate spaces.
- the nature of the adsorptive, chemisorptive or catalytic (or combination thereof) air cleaning device is such that the rate of removal of a particular contaminant or contaminants expressed as efficiency (defined as the ratio of inlet concentration minus outlet concentration all divided by inlet concentration) remains essentially constant until a certain period of time of operation of the apparatus has passed or a certain amount of contaminated outside air has passed into the bed.
- the predictable efficiency of cleaning of the part of the air flow passing through the gas phase air cleaning device combined with the predictable proportion of the air flow that is passing through the gas phase air cleaning device is equivalent in effect to a predictable equivalent efficiency of gas phase air cleaning of the entire air flow.
- the predictable equivalent efficiency of gas phase air cleaning of the entire air flow permits an increase in the predictable quality of the air in the space superior to that which would otherwise be obtained with a chosen ventilation rate

### AN EXAMPLE OF USE OF DEEP BED GAS PHASE AIR CLEANING DEVICE - WITH CONCLUSIONS

A new air-conditioned office building is to be constructed and the following applies
- The building is to be occupied by 1,000 people during working hours in a space of 10 sq. m. floor area per person
- Building regulations require that, for odour control the minimum ventilation rate is 7.5 litres per second (l/s) per person ie 7,500 l/s total
- The owner of the facility requires that the odour levels in the building be equivalent, or better, to that which would be obtained if the building were ventilated at the rate of 15 l/s/person
- Building regulations allow that the ventilation rate may be reduced to the greater of 2.5 I/s/person or 0.35 I/s/sq.m. of floor area when air cleaning that is in place removes odours from the air to the extent that the odour level is equivalent to that which it would be if the ventilation rate were 7.5 l/s/sq.m.
- The amount of air required to be delivered to the air-conditioned space is 60,000 l/s and this required air delivery rate is set by the need for a particular heating or cooling effect in conjunction with certain other parameters chosen by the designers of the air-conditioning system.
- Cooling effect (of air-conditioning) is obtained by electrically driven refrigeration plant and the cost of electricity is, at any time, $0.12 per kWH
- Heating effect (of air-conditioning) is obtained by from a natural gas or similar fuel source and this is supplied to the building at a cost (per unit of energy supplied to the building), at any time, of $0.05 per kWH
- The marginal capital cost of air-conditioning capacity (including heating and cooling effect delivered, at the time of construction) is $2000 per kW of marginal refrigeration capacity installed
- The outdoor air temperatures are described as
   o winter heating season: 7,500 "degree hours", with outdoor air minimum design temperature 10C below design room temperature
   o summer cooling season: 10,000 degree hours (temperature equivalent, including cooling and dehumidification requirement) with outdoor air maximum design temperature 10C above design room temperature

We note that this is a plausible scenario for a reasonably practicable design of an air-conditioning system of a building where the minimum ventilation requirements are set by the 1991 edition of Australian Standard 1668.2 in circumstances where the use of particulate (ie not gas phase filters) is arranged such that maximum advantage is obtained by their use in accordance with AS1668.2: 1991

Say the real ventilation rate is reduced from 15 to 3.5 litres per second per person (or 10 sq m) by use of gas phase air filters

### Capital Cost Savings Calculation

- Ventilation Reduction = (15-3.5) * 1,000 = 11,500 I/s
- Associated Peak cooling load is: 11,5001/s * 10C * 1.2 (specific heat) or 138,000 watts or 138 kW
- Associated marginal capital cost = 138 kW * $2,000/kW = $276,000

### Annual Heating Cost Savings Calculation

- Annual heating savings = 11,500 I/s * 7,500 deg hr * 1.2 = 86,250,000 WH = 86,250 kWH
- Using a plant efficiency of 80% the required input of energy to the plant is
- 86,250/0.8 =107,812.5 kWH @ $0.05/kWH = $5,391/annum

### Annual Cooling Cost Savings Calculation

- Annual cooling savings = 11500 I/s * 10,000 deg hr * 1.2 = 115,000,000 WH= 115,OOOkWH
- Using a plant average Refrigeration Coefficient of Performance of 3.5 the required input of energy to the plant is 115,000/3.5 = 32,857 kWh @ $0.12/kWH = $3,943 pa

### Annual Energy Cost Savings Calculation

Thus total energy cost savings are $3,943 + $5,391 = $9,334/ annum

### Summary

Capital savings are $276,000 and annual savings are $9,943

A deep bed gas phase filter is available for use and it has these characteristics
- Its efficiency, in accordance with AS1668.2:1991, for removal of relevant odours and irritants, is not less than 98% (i.e. 0.98) during its estimated 3 year lifetime
- Its resistance to airflow through it is substantially constant and not greater than 500 Pascals
- The filter is available in easily assembled 1000 I/s (airflow capacity) modules at an installed cost of $1,500 each. And the cost of air cleaning material in each module (including installation etc) is $1,500
- Modules may be refilled with new air cleaning material

### Capital costs

| | |
|---|---|
| Potential savings (above) | = $276,000 |
| Module Costs 12*1500 | = $18,000 |
| Net capital savings | = $258,000 |

### Running costs

| | |
|---|---|
| Required airflow through gas phase unit | = 1,000 persons * (15-3.5) l/s / 0.98 |
| | = 11,735 I/s |
| Saved heating/cooling | = $9,334 |
| Annual air cleaning material costs | = $6,000 (12 module refills @ $1,500/3 years) |
| Fan energy costs | = 500 (Pa) * 11.735 (m3/sec) / |
| | 0.70 (fan efficiency) * 2,500 |
| | (hours/year) @ $0.12(/kWH) |
| | = $2,515 |
| | |
| TOTAL (net) saving | = $819, say $800 |

### Conclusions:

- **an upfront saving of $ 258,000 results in an annual saving of $800 when a reasonably pessimistic analysis is undertaken.**
- **probably, in average circumstances of application in moderate climate areas there would be a net operating cost saving**
- **in weather conditions less moderate than those used in the example greater capital and operating savings would be obtained**
- **significant capital savings seem likely in most circumstances of application**

In other forms of the arrangement any number and/or combination of spaces is served by any number and/or combination of air handling and/or air conditioning, and/or ventilation systems and/or devices.

Many other permutations and combinations of air handling units, conditioned and/or ventilated spaces and thick bed gas phase air cleaning devices are possible and practical.

## Claims

1. An apparatus (1) for removing gaseous contaminants from an intake air flow (2) including:
a means to divide the intake air flow (2) into a first air flow (3) and at least one other air flow (4) such that the first air flow (3) is small when compared to the sum of the first air flow (3) and each other air flow (4);
a gas phase cleaning device (5) for cleaning the first air flow (3); and
a means to combine the cleaned first air flow (11) and all other air flows (4) to form an outlet air flow (12);
**CHARACTERISED IN THAT** the gas phase cleaning device (5) includes a cleaning bed (8) having a thickness of greater than the Critical Thickness for the contaminant of concern and through which the entire first air flow (3) is passed.

2. An apparatus according to claim 1, wherein the cleaning bed (8) includes an adsorbent cleaning bed.

3. An apparatus according to claim 1, wherein the cleaning bed (8) includes a chemisorptive cleaning bed.

4. An apparatus according to claim 1, wherein the cleaning bed (8) includes a catalytic cleaning bed.

5. An apparatus according to claim 1, wherein the cleaning bed includes at least two beds selected from an adsorbent cleaning bed, a chemisorptive cleaning bed and a catalytic cleaning bed.

6. An apparatus according to any one of the previous claims wherein the gas cleaning device (5) includes a fan (10).

7. An apparatus according to any one of the previous claims wherein the gas phase cleaning device (5) includes at least one particulate arresting filter (7).

8. An apparatus according to claim 7 wherein a particle arresting filter (7) is positioned upstream of the bed (8).

9. An apparatus according to claim 7 wherein a particle arresting filter (9) is positioned downstream of the bed (8).

10. An apparatus according to any one of the previous claims wherein the intake air flow (2) is divided into a first air flow (3) and a second air flow (4).

11. An apparatus according to any one of the previous claims wherein the constant proportion of contaminant removed from the first air flow (3) is at least 98%.

12. A method for removing gaseous contaminants from an intake air flow (2) including the following steps:
dividing the intake air flow (2) into a first air flow (3) and at least one other air flow (4);
cleaning the first air flow (3) by passing the entire first air flow (3) through a gas phase cleaning device (5) that includes a cleaning bed (8) having a thickness of greater than the Critical Thickness for the contaminant of concern; and
combining the cleaned first air flow (11) and all other air flows (4) to form an outlet air flow (12);
where the first air flow (3) is small when compared to the sum of the first air flow (3) and each other air flow (4).

13. A method according to claim 12, wherein the cleaning bed (8) includes an adsorbent cleaning bed.

14. A method according to claim 12, wherein the cleaning bed (8) includes a chemisorptive cleaning bed.

15. A method according to claim 12, wherein the cleaning bed (8) is a catalytic cleaning bed.

16. A method according to claim 12, wherein the cleaning bed (8) includes at least two beds selected from an adsorbent cleaning bed, a chemisorptive cleaning bed and a catalytic cleaning bed.

17. A method according to any one of claims 12 to 16 wherein the gas cleaning device (5) includes a fan (10).

18. A method according to any of claims 12 to 17 wherein the gas phase cleaning device (5) includes at least one particulate arresting filter (7).

19. A method according to claim 18 wherein a particle arresting filter (7) is positioned upstream of the bed (8).

20. A method according to claim 18 wherein a particle arresting filter (9) is positioned downstream of the bed (8).

21. A method according to any one of claims 12 to 20 wherein the intake air flow (2) is divided into a first air flow (3) and a second air flow (4).

22. A method according to any one of claims 12 to 21 wherein the constant proportion of contaminant removed from the first air flow (3) is at least 98%.

23. An air cleaning system for removing contaminant from at least one space (31) including at least one apparatus (7) according to any one of claims 1 to 11.

24. An air cleaning system for removing contaminant from at least one space (31) using at least one method according to any one of claims 12 to 22.

## Patentansprüche

1. Vorrichtung (1) zur Entfernung gasförmiger Verunreinigungen aus einem Ansaugluftstrom (2), die aufweist:
eine Einrichtung, um den Ansaugluftstrom (2) in einen ersten Luftstrom (3) und mindestens einen anderen Luftstrom (4) zu teilen, so daß der erste Luftstrom (3) im Vergleich zur Summe aus erstem Luftstrom (3) und jedem weiteren Luftstrom (4) klein ist;
eine Gasphasenreinigungsvorrichtung (5) zur Reinigung des ersten Luftstroms (3); und
eine Einrichtung, um den gereinigten ersten Luftstrom (11) und alle anderen Luftströme (4) zu vereinigen, um einen Auslaßluftstrom (12) zu bilden;
**dadurch gekennzeichnet, daß** die Gasphasenreinigungsvorrichtung (5) ein Reinigungsbett (8) aufweist, das eine größere Dicke als die kritische Dicke für die interessierende Verunreinigung aufweist und durch das der gesamte erste Luftstrom (3) geschickt wird.

2. Vorrichtung nach Anspruch 1, wobei das Reinigungsbett (8) ein adsorbierendes Reinigungsbett aufweist.

3. Vorrichtung nach Anspruch 1, wobei das Reinigungsbett (8) ein chemisorbierendes Reinigungsbett aufweist.

4. Vorrichtung nach Anspruch 1, wobei das Reinigungsbett (8) ein katalytisches Reinigungsbett aufweist.

5. Vorrichtung nach Anspruch 1, wobei das Reinigungsbett mindestens zwei Betten aufweist, die aus einem adsorbierenden Reinigungsbett, einem chemisorbierenden Reinigungsbett und einem katalytischen Reinigungsbett ausgewählt sind.

6. Vorrichtung nach einem der vorhergehenden Ansprüche, wobei die Gasreinigungsvorrichtung (5) einen Ventilator (10) aufweist.

7. Vorrichtung nach einem der vorhergehenden Ansprüche, wobei die Gasphasenreinigungsvorrichtung (5) mindestens einen Teilchenrückhaltefilter (7) aufweist.

8. Vorrichtung nach Anspruch 7, wobei ein Teilchenrückhaltefilter (7) stromaufwärts vom Bett (8) angeordnet ist.

9. Vorrichtung nach Anspruch 7, wobei ein Teilchenrückhaltefilter (9) stromabwärts vom Bett (8) angeordnet ist.

10. Vorrichtung nach einem der vorhergehenden Ansprüche, wobei der Ansaugluftstrom (2) in einen ersten Luftstrom (3) und einen zweiten Luftstrom (4) geteilt ist.

11. Vorrichtung nach einem der vorhergehenden Ansprüche, wobei der konstante Verunreinigungsanteil, der aus dem ersten Luftstrom (3) entfernt wird, mindestens 98% beträgt.

12. Verfahren zum Entfernen gasförmiger Verunreinigungen aus einem Ansaugluftstrom (2), das die folgenden Schritte aufweist:
Teilen des Ansaugluftstroms (2) in einen ersten Luftstrom (3) und mindestens einen anderen Luftstrom (4);
Reinigen des ersten Luftstroms (3), indem der gesamte erste Luftstrom (3) durch eine Gasphasenreinigungsvorrichtung (5) geschickt wird, die ein Reinigungsbett (8) aufweist, das einen größere Dicke als die kritische Dicke für die interessierende Verunreinigung aufweist; und
Vereinigen des gereinigten ersten Luftstroms (11) und aller anderen Luftströme (4), um einen Auslaßluftstrom (12) zu bilden;
wobei der erste Luftstrom (3) im Vergleich zur Summe aus erstem Luftstrom (3) und jedem anderen Luftstrom (4) klein ist.

13. Verfahren nach Anspruch 12, wobei das Reinigungsbett (8) ein adsorbierendes Reinigungsbett aufweist.

14. Verfahren nach Anspruch 12, wobei das Reinigungsbett (8) ein chemisorbierendes Reinigungsbett aufweist.

15. Verfahren nach Anspruch 12, wobei das Reinigungsbett (8) ein katalytisches Reinigungsbett ist.

16. Verfahren nach Anspruch 12, wobei das Reinigungsbett (8) mindestens zwei Betten aufweist, die aus einem adsorbierenden Reinigungsbett, einem chemisorbierenden Reinigungsbett und einem katalytischen Reinigungsbett ausgewählt sind.

17. Verfahren nach einem der Ansprüche 12 bis 16, wobei die Gasreinigungsvorrichtung (5) einen Ventilator (10) aufweist.

18. Verfahren nach einem der Ansprüche 12 bis 17, wobei die Gasphasenreinigungsvorrichtung (5) mindestens einen Teilchenrückhaltefilter (7) aufweist.

19. Verfahren nach Anspruch 18, wobei ein Teilchenrückhaltefilter (7) stromaufwärts vom Bett (8) angeordnet ist.

20. Verfahren nach Anspruch 18, wobei ein Teilchenrückhaltefilter (9) stromabwärts vom Bett (8) angeordnet ist.

21. Verfahren nach einem der Ansprüche 12 bis 20, wobei der Ansaugluftstrom (2) in einen ersten Luftstrom (3) und einen zweiten Luftstrom (4) geteilt wird.

22. Verfahren nach einem der Ansprüche 12 bis 21, wobei der konstante Verunreinigungsanteil, der aus dem ersten Luftstrom (3) entfernt wird, mindestens 98% beträgt.

23. Luftreinigungsanlage zur Entfernung einer Verunreinigung aus mindestens einem Raum (31), die mindestens eine Vorrichtung (7) nach einem der Ansprüche 1 bis 11 aufweist.

24. Luftreinigungsanlage zur Entfernung einer Verunreinigung aus mindestens einem Raum (31), die mindestens ein Verfahren nach einem der Ansprüche 12 bis 22 verwendet.

## Revendications

1. Dispositif (1) pour retirer des contaminants gazeux d'un flux d'air d'admission (2) comportant :
des moyens pour diviser le flux d'air d'admission (2) en un premier flux d'air (3) et au moins un autre flux d'air (4) de telle sorte que le premier flux d'air (3) est faible en comparaison de la somme du premier flux d'air (3) et de chaque autre flux d'air (4) ;
un dispositif de nettoyage en phase gazeuse (5) pour nettoyer le premier flux d'air (3) ; et
des moyens pour combiner le premier flux d'air nettoyé (11) et tous les autres flux d'air (4) pour former un flux d'air de sortie (12) ;
**caractérisé en ce que** le dispositif de nettoyage en phase gazeuse (5) comporte un lit nettoyant (8) présentant une épaisseur supérieure à l'épaisseur critique pour le contaminant en question et à travers lequel tout le premier flux d'air (3) est amené à passer.

2. Dispositif selon la revendication 1, dans lequel le lit nettoyant (8) comporte un lit nettoyant adsorbant.

3. Dispositif selon la revendication 1, dans lequel le lit nettoyant (8) comporte un lit nettoyant à adsorption chimique.

4. Dispositif selon la revendication 1, dans lequel le lit nettoyant (8) comporte un lit nettoyant catalytique.

5. Dispositif selon la revendication 1, dans lequel le lit nettoyant comporte au moins deux lits sélectionnés parmi un lit nettoyant adsorbant, un lit nettoyant à adsorption chimique et un lit nettoyant catalytique.

6. Dispositif selon l'une quelconque des revendications précédentes, dans lequel le dispositif de nettoyage de gaz (5) comporte un ventilateur (10).

7. Dispositif selon l'une quelconque des revendications précédentes, dans lequel le dispositif de nettoyage en phase gazeuse (5) comporte au moins un filtre de blocage de particules (7).

8. Dispositif selon la revendication 7, dans lequel un filtre de blocage de particules (7) est positionné en amont du lit (8).

9. Dispositif selon la revendication 7, dans lequel un filtre de blocage de particules (9) est positionné en aval du lit (8).

10. Dispositif selon l'une quelconque des revendications précédentes, dans lequel le flux d'air d'admission (2) est divisé en un premier flux d'air (3) et un second flux d'air (4).

11. Dispositif selon l'une quelconque des revendications précédentes, dans lequel la proportion constante de contaminant retiré du premier flux d'air (3) est au moins de 98%.

12. Procédé d'élimination de contaminants gazeux d'un flux d'air d'admission (2) comportant les étapes suivantes consistant à :
diviser le flux d'air d'admission (2) en un premier flux d'air (3) et au moins un autre flux (4) ;
nettoyer le premier flux d'air (3) en faisant passer l'ensemble du premier flux d'air (3) à travers un dispositif de nettoyage en phase gazeuse (5) qui comporte un lit nettoyant (8) présentant une épaisseur supérieure à l'épaisseur critique pour le contaminant en question ; et
combiner le premier flux d'air nettoyé (11) et tous les autres flux d'air (4) pour former un flux d'air de sortie (12) ;
dans lequel le premier flux d'air (3) est faible en comparaison de la somme du premier flux d'air (3) et de chaque autre flux d'air (4).

13. Procédé selon la revendication 12, dans lequel le lit nettoyant (8) comporte un lit nettoyant adsorbant.

14. Procédé selon la revendication 12, dans lequel le lit nettoyant (8) comporte un lit nettoyant à adsorption chimique.

15. Procédé selon la revendication 12, dans lequel le lit nettoyant (8) est un lit nettoyant catalytique.

16. Procédé selon la revendication 12, dans lequel le lit nettoyant (8) comporte au moins deux lits sélectionnés parmi un lit nettoyant adsorbant, un lit nettoyant à adsorption chimique et un lit nettoyant catalytique.

17. Procédé selon l'une quelconque des revendications 12 à 16, dans lequel le dispositif de nettoyage de gaz (5) comporte un ventilateur (10).

18. Procédé selon l'une quelconque des revendications 12 à 17, dans lequel le dispositif de nettoyage en phase gazeuse (5) comporte au moins un filtre de blocage de particules (7).

19. Procédé selon la revendication 18, dans lequel un filtre de blocage de particules (7) est positionné en amont du lit (8).

20. Procédé selon la revendication 18, dans lequel un filtre de blocage de particules (9) est positionné en aval du lit (8).

21. Procédé selon l'une quelconque des revendications 12 à 20, dans lequel le flux d'air d'admission (2) est divisé en un premier flux d'air (3) et un second flux d'air (4).

22. Procédé selon l'une quelconque des revendications 12 à 21, dans lequel la proportion constante de contaminant retiré du premier flux d'air (3) est au moins de 98%.

23. Système de nettoyage d'air pour retirer un contaminant d'au moins un espace (31) comportant au moins un dispositif (1) selon l'une quelconque des revendications 1 à 11.

24. Système de nettoyage d'air pour retirer un contaminant d'au moins un espace (31) en utilisant au moins un procédé selon l'une quelconque des revendications 12 à 22.
